# EUROPÄISCHE PATENTSCHRIFT

(11) **EP 2 019 780 B1**
(45) Veröffentlichungstag und Bekanntmachung des Hinweises auf die Patenterteilung: **25.11.2009**
(21) Anmeldenummer: 07727123.7
(22) Anmeldetag: 20.03.2007
(51) Int. Cl.: B65B 5/02, B65B 35/18, B65B 35/26, B65B 35/58, B65G 47/84

(54) **VERFAHREN ZUM VERPACKEN VON PRODUKTEN IN WALLET PACKUNGEN**
METHOD FOR PACKING PRODUCTS IN WALLET PACKAGES
PROCÉDÉ DE CONDITIONNEMENT DE PRODUITS DANS DES ÉTUIS-PORTEFEUILLES

(30) Priorität: 12.05.2006 DE 102006022656
(43) Veröffentlichungstag der Anmeldung: 04.02.2009
(73) Patentinhaber: Robert Bosch GmbH, 70442 Stuttgart (DE)
(72) Erfinder: FUELLEMANN, Cyrille, CH-8200 Schaffhausen (CH); SCHWARZ, Daniel, CH-8476 Unterstammheim (CH)
(86) Internationale Anmeldenummer: PCT/EP2007/052646
(87) Internationale Veröffentlichungsnummer: WO 2007/131822

(56) Entgegenhaltungen:
- EP-A1- 1 048 595
- WO-A-2006/000172
- WO-A-2006/010086
- DE-U1- 20 105 928
- DE-U1- 20 200 650

## Beschreibung

### Technisches Gebiet

Die Erfindung betrifft ein Verfahren nach dem Oberbegriff des Anpruchs 1.

### Stand der Technik

Wallets sind Kombinationsverpackungen, welche in der Pharmaindustrie nicht mehr wegzudenken sind. Beim Wallet sind Tablettenblister und Beipackzettel in einer Faltschachtel befestigt und sie lassen sich nicht zerstörungsfrei daraus entfernen. Der Beipackzettel lässt sich somit nicht verlieren. Zudem ist eine geregelte einnahme der Tabletten gewährleistet, da der Patient den Überblick behalten kann, welche Tabletten er schon zu sich genommen hat.

Üblicherweise werden bei der Abpackung der verschiedenen Produkte, insbesondere der Beipackzettel und der Blister mit den Tabletten, einer Hauptförderstrasse Kartonzuschnitte für die Faltschachtel zugeführt. Die Zuführung erfolgt dabei getaktet. Auf die Kartonzuschnitte werden die ebenfalls im Takt zugeführte Tablettenblister und Beipackzettel gelegt und üblicherweise angeklebt. Anschliessend werden die Kartonzuschnitte gefaltet und in die gewünschte Walletform gebracht. Dieses Verfahren hat sich zwar in der Praxis bewährt. Es ist jedoch relativ langsam. Typischerweise werden 200 bis 300 Wallet Packungen pro Minute hergestellt.

Des weiteren ist aus der WO 2006/000172 ein Verfahren und eine Vorrichtung zum Verpacken von Produkten in Wallets bekannt. Hier werden nicht Kartonzuschnitte zugeführt, sondern die Faltschachtel wird während dem Abfüllprozess hergestellt und gefaltet. Hierfür wird ab einer Rolle ein Bandmaterial, insbesondere Karton, kontinuierlich entlang einer Hauptförderstrasse gefördert. Das Bandmaterial wird entlang dieser Hauptförderstrasse zugeschnitten und in die gewünschte Walletform gefaltet, nachdem die einzelnen Zuschnitte mit den notwendigen Produkten befüllt bzw. versehen worden sind. Diese Vorrichtung ermöglicht bereits grössere Durchsätze. Sie ist jedoch nach wie vor durch die Geschwindigkeit der Übergabe der einzelnen Produkte beschränkt.

EP 1'595'828 und DE 10'2004'043'332 offenbaren Vorrichtungen zum Übergeben von Blistern. Diese Vorrichtungen weisen Mittel zum Schwenken der Blister auf, wobei die Schwenkbewegung in vertikaler Richtung erfolgt.

Ferner ist aus EP 1'216'939 eine Vorrichtung zum Zwischenspeichern von Produkten bekannt, welche eine Karusselleim-ichtung umfasst. In diesem Karussell laufen mit einer regelmässigen ersten Teilung Greifer über eine geschlossene und annähernd horizontale Umlaufbahn um. Die Greifer sind einzeln zwischen einem ersten Zustand, in welchem sie die Produkte erfassen und mitnehmen, in einen zweiten Zustand schaltbar, in welchem sie die Produkte von den Greifern lösen. Bei einer Übergabestelle laufen die Greifer oberhalb des Eingangsförderers durch. Sie werden an der Übergabestelle in den ersten Zustand geschaltet, in welchem sie jeweils ein Produkt erfassen und mitnehmen. Ein Speicher hat in regelmässiger zweiter Teilung in einer geschlossenen und annähernd horizontalen zweiten Umlaufbahn umlaufende Mitnehmer. Die zweite Umlaufbahn verläuft über einen Pufferbereich parallel zur ersten Umlaufbahn. Innerhalb des Pufferbereichs sind die Greifer in ihren zweiten Zustand schaltbar. Die Umlaufgeschwindigkeit der Greifer ist grösser als die Umlaufgeschwindigkeit der Mitnehmer. Eine Steuereinrichtung steuert die Schaltung der Greifer in den zweiten Zustand derart, dass jedes Speicherfach zwischen benachbarten Mitnehmern stromabwärts des Pufferbereichs ein Produkt enthält.

In der noch unveröffentlichten DE 102005054005.8 vom 10. November 2005 ist ferner eine Karusselleinrichtung oder ein Drehrad mit verschwenkbaren Armen bekannt. Diese beweglichen Arme erlauben eine Tracking-Schwenkbewegung einer Armhülse zum Aufnehmen, Drehen und positioniertem Ablegen von Produkten. Dadurch lassen sich Geschwindigkeitsschwankungen zwischen Zufuhrförderern und nachfolgenden Abfuhrförderern ohne Probleme kompensieren.

Ein Verfahren der eingangs genannten Art ist aus WO 2006/010086 A bekannt.

### Darstellung der Erfindung

Es ist eine Aufgabe der Erfindung, ein Verfahren zum Verpacken von Produkten in Wallet Packungen zu schaffen, welches den Durchsatz erhöht.

Diese Aufgabe löst ein Verfahren mit den Merkmalen des Patentanspruchs 1.

Eine zur Durchführung der Verfahrens geeignete Vorrichtung zum Verpacken von Produkten in Wallet Packungen weist eine Hauptförderstrasse auf zum Transport der Wallet Packungen als Packungszuschnitte oder als Bandmaterial. Die Vorrichtung verfügt ferner über Zuführmittel zur Zuführung der Produkte in dieser Hauptförderstrasse sowie Platzierungsmittel zur Ablage der Produkte auf die Packungszuschnitte bzw. auf das Bandmaterial. Mindestens ein Teil der Zuführmittel sind in annähernd horizontaler Richtung schwenkbar, um die Produkte in die Hauptförderstrasse abzugeben.

Das erfindungsgemässe Verfahren und die Vorrichtung erlauben eine Synchronisation mehrerer über verschiedene Zuführer zugeführter Produkte, ohne dass die Hauptfördergeschwindigkeit merklich reduziert werden muss. Es sind Fördergeschwindigkeiten bzw. Herstellungsgeschwindigkeiten von bis zu 600 oder mehr Packungen pro Minute möglich. Des weiteren können auf diese Art auch getaktet zugeführte Produkte in den kontinuierlich laufenden Hauptprozess abgegeben werden.

Das erfindungsgemässe Verfahren und die Vorrichtung weisen mehrere weitere Vorteile auf. Die Vorrichtung lässt sich kompakt ausgestalten und ist trotzdem in der Gestaltung sehr flexibel. Des weiteren ist die Zugänglichkeit der Hauptrorderstrasse verbessert, da insbesondere über dieser Strasse weniger Bauteile, wie beispielsweise Zuführschächte, angeordnet werden müssen.

Die Produkte lassen sich in einem einzigen Schritt drehen und orientieren und zudem noch auf die notwendige Fördergeschwindigkeit bringen, d.h. synchronisieren. Produktespeicher können auf einfache Weise in die Vorrichtung integriert werden. Das Verfahren und die Vorrichtung sind kostengünstig. Des weiteren lässt sich relativ einfach eine automatische Qualitätskontrolle in die Vorrichtung integrieren.

Weitere vorteilhafte Ausfühnmgsformen und Varianten des Verfahrens gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Gleiche Teile sind mit gleichen Bezugszeichen versehen. Es zeigen:
- Figur 1: eine schematische Darstellung einer Verpackungsvorrichtung gemäss dem Stand der Technik;
- Figur 2: eine schematische Darstellung einer Verpackungsvorrichtung gemäss einer ersten Ausführungsform;
- Figur 3: ein Auszug aus Figur 2 in vereinfachter Darstellung;
- Figur 4: eine schematische Darstellung eines Drehrads der Vorrichtung gemäss Figur 2 und
- Figur 5: ein Auszug aus einer Vorrichtung in einer zweiten Ausführungsform.

### Wege zur Ausführung der Erfindung

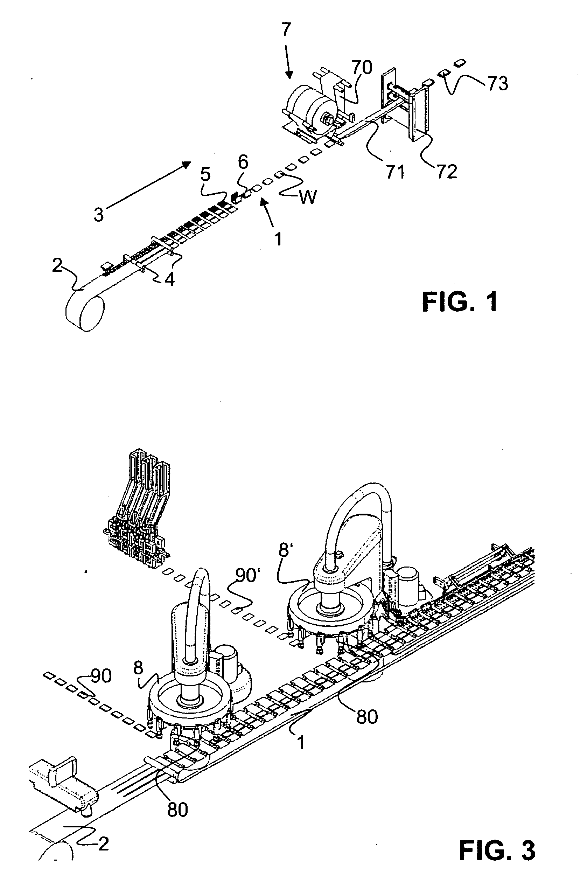

Figur 1 zeigt eine Vorrichtung zum Verpacken von Produkten in Wallet Packungen, wie sie in WO 2006/000172 beschrieben ist. Die Wallet Packung bildet dabei einer Erstverpackung, welche zusätzlich noch in eine Zweitverpackung, insbesondere in einen Schlauchbeutel verpackt wird.

Entlang einer vorzugsweise geradlinig und vorzugsweise annähernd horizontal verlaufenden Hauptförderstrasse 1 wird bandförmiger Karton von einer Rolle abgewickelt. Die Hauptförderstrasse 1 kann ein- oder mehrbahnig sein. Das Kartonbandmaterial 2 wird in einer Bedruckungseinheit 3 bedruckt, in einer anschliessenden Schneide- und Berillungseinheit 4 in Kartonzuschnitte geschnitten und anschliessend automatisch zu einem Wallet W gefaltet. Vor, während und nach der Faltung werden, wie später ausgeführt, einzelne Produkte in bzw. auf das Wallet W gelegt. In Figur 1 ist mit der Bezugsziffer 5 eine Stelle gekennzeichnet, an welcher beispielsweise ein Packungsbeizettel hinzugefügt werden kann. Die Bezugsziffer 6 bezeichnet eine Stelle, an welche beispielsweise ein Tablettenblister in das teilweise gefaltete Wallet W geklebt werden kann.

Ist das Wallet W gefaltet, so wird es zu einer horizontalen Schlauchbeutelverpackungsmaschine 7 bekannter Art gefördert. Dort wird ein Folienbandmaterial 70 zu einem Verpackungsschlauch 71 geformt, wobei die Wallets W in diesen Schlauch gefördert werden. Eine Quersiegel- und Trenneinheit 72 siegelt Quernähte und trennt die einzelnen Schlauchbeutel 73 voneinander.

Diese Vorrichtung wird vorzugsweise kontinuierlich betrieben, wobei die Fördergeschwindigkeit entlang der Hauptförderstrecke 1 während des Verpackungsvorgangs mittels einer Steuerung variiert werden kann.

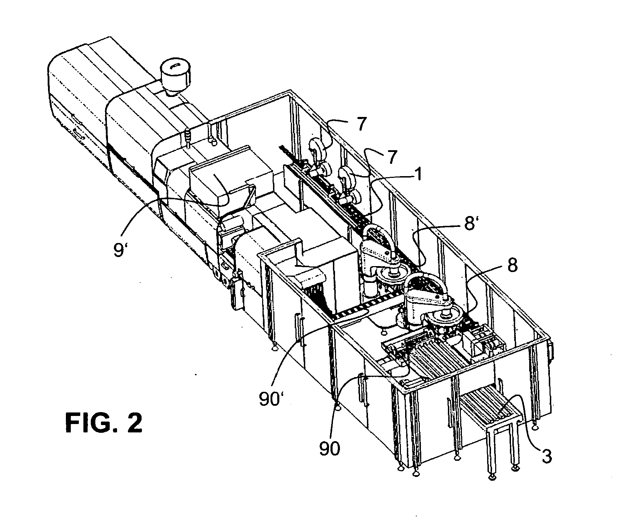

In Figur 2 sind nun schematisch zwei Zuliefereinheiten dargestellt, welche die in die Wallets zu verpackenden Produkte liefern und welche in Hauptförderrichtung hintereinander angeordnet sind. Die zwei Einheiten können dieselbe Art Produkte oder jede kann ein eigenes, von der Zulieferung der anderen Einheit verschiedenartiges Produkt liefern. Es können auch weniger oder mehr Zuliefereinheiten in Hauptförderrichtung hintereinander angeordnet sein. Vorzugsweise umfasst jede Zuliefereinheit je ein Karussell 8, 8'. Die übrige Ausgestaltung der Zuliefereinheit hängt von der Art des einzubringenden Produkts ab und auch von der Art und Weise, wie das Produkt zur Zuliefereinheit gelangt.

In der in Hauptfördeirichtung ersten Zuliefereinheit liefert eine Anliefereinheit 9 erste Produkte, beispielsweise Beipackzettel, auch Patienteninformationen genannt, an einen ersten Zuführer 90. Die Anliefereinheit 9 kann, wie hier dargestellt, beispielsweise auf einer Platte verschiebbare Schieber umfassen. Der Zuführer 90 ist vorzugsweise ein endlos umlaufendes Förderband oder eine endlos umlaufende Mitnehmerkette, welche annähernd senkrecht zur Hauptförderstrasse 1 und in einer horizontaler Ebene verläuft.

An der Schnittstelle von Zuführer 90 und Hauptförderstrasse 1 ist ein erstes Karussell 8 oder Drehrad angeordnet. Dieses wird später im Text näher erläutert.

Die zweite Zuliefereinheit liefert zweite Produkte, beispielsweise mit Tabletten gefüllte erste Blister direkt aus einer Produktionseinheit 9' an. Ein zweiter Zuführer 90, vorzugsweise ebenfalls ein Bandförderer oder eine Mitnehmerkette, steht wiederum annähernd senkrecht zur Hauptförderrichtung und verläuft in einer horizontalen Ebene. Auch hier ist an dem der Hauptförderstrasse 1 zugewandten Ende des zweiten Zuführers 90' ein zweites Karussell 8' angeordnet, um die zweiten Produkte in die Hauptförderstrasse 1 einzubringen bzw. diese Produkte auf oder in das Wallet W abzulegen.

Weitere Zuliefereinheiten können weitere Tablettenblister oder auch andere in die Wallets abzulegende Produkte zuführen.

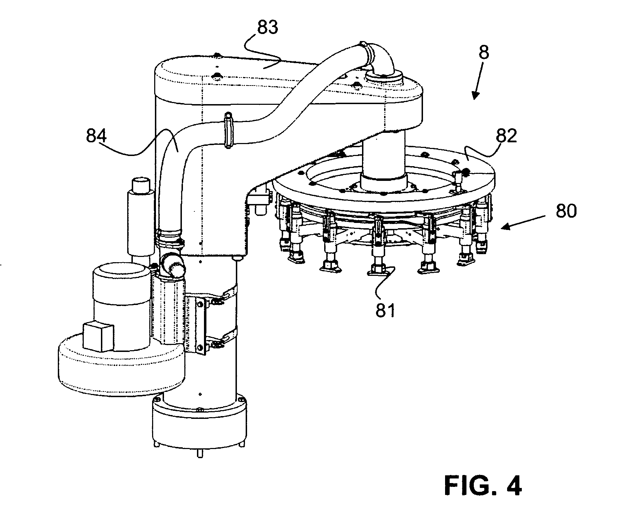

In den Figuren 3 und 4 sind nun die Zuführmittel oder Karussells 8, 8' besser erkennbar. Diese Karussells werden auch Feeding wheels genannt. Jedes Karussell 8, 8' weist ein annähernd horizontal verlaufendes Drehrad 82 auf, welches von einem Trägerarm 83 gehalten ist. Das Drehrad 82 rotiert um eine zentrale Achse, wobei es dabei mit einem ersten Bereich über der Hauptförderstrasse 1 und mit einem zweiten Bereich über dem zugehörigen Zuführer 90, 90' angeordnet ist. Am Drehrad 82 sind nach unten ragende und über die Peripherie des Drehrads gleichmässig verteilt angeordnete Platzierungsmittel oder Greifarme 80 befestigt. Die Greifarme 80 können, müssen aber nicht, um ihre eigene Achse drehbar ausgebildet sein. An den nach unten ragenden freien Enden der Greifarme 80 sind Saugnäpfe 81 vorhanden, welche über eine pneumatische Verbindung 84 ansteuerbar sind. Mittels diesen Saugnäpfen 81 lassen sich die einzelnen Produkte vom Zuführer 90, 90' ergreifen und in gewünschter Ausrichtung und Lage auf die Flauptförderstrasse 1 abgeben. Dabei können die Produkte während der Umsetzung gedreht und ausgerichtet werden. Des weiteren kann beim Ablegen ein Druck auf das abgelegte Produkt ausgeübt werden, so dass es in das Wallet gepresst wird. Dies kann dazu dienen, das Produkt in eine vorgegebene Aufnahme einrasten zu lassen oder auch, um das Produkt mittels eines vorgängig am Wallet und/oder am Produkt angebrachten Leimtupfers im Wallet zu befestigen.

Die Karussells 8, 8' können alle gleich ausgebildet sein oder sie können je nach Art des umzusetzenden Produkts unterschiedlich ausgestaltet sein. Insbesondere können die Greifarme 80 und die Form und Anzahl der Saugnäpfe 81 unterschiedlich gestaltet sein.

Des weiteren können anstelle der Saugnäpfe 81 auch mechanische Greifer oder andere zur Umsetzung der Produkte geeignete Mittel eingesetzt sein.

Für die Umsetzung der Produkte dreht das Karussell 8, 8' mit einer Geschwindigkeit, welche der Hauptfördergeschwindigkeit der Hauptförderstrasse 1 angepasst ist und welche zugleich die Zulieferrate des Zuführers 90, 90' berücksichtigt. Werden zuwenig Produkte angeliefert, so kann die Hauptförderstrasse 1 mittels einer zentralen Steuerung langsamer betrieben werden. Gelangen jedoch zuviel Produkte zum Karussell 8, 8', wobei die maximal erreichbare Geschwindigkeit der Hauptförderstrasse 1 bereits erreicht ist bzw. anderweitige Bedingungen verhindern das Erhöhen dieser Geschwindigkeit, so sind Speicher notwendig.

In einer ersten Ausführungsform lässt sich das Karussell 8, 8' selber als Speicher verwenden, indem die Greifarme 80 verschwenkbar ausgebildet sind, wie dies in der oben genannten noch unveröffentlichten DE 102005054005.8 vorgeschlagen wird. Diese Ausführungsform eignet sich insbesondere dann, wenn der der Zuführung vorangehende Prozess nicht mit dem Hauptprozess gemäss Figur 1, d.h. die Herstellung der Wallets und Verpackung der Produkte in die Wallets synchronisiert werden kann. Die beweglichen Arme können Geschwindigkeitsschwankungen der beiden Prozesse bis zu einem gewissen Mass ausgleichen.

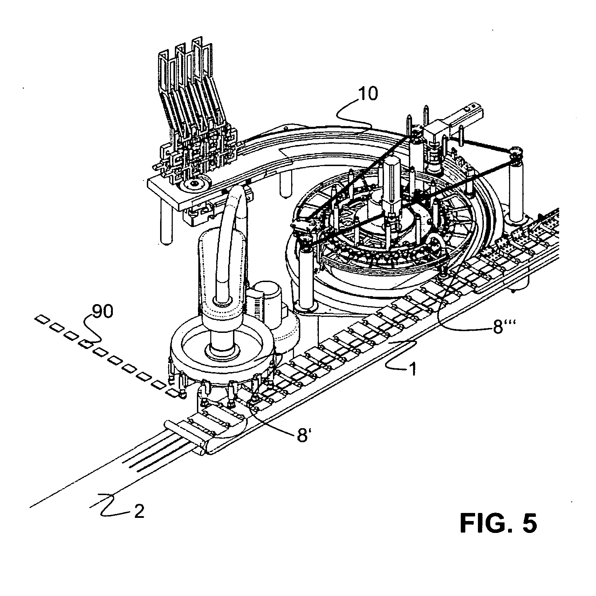

Zusätzlich oder anstelle dieser verschwenkbaren Greifarme lässt sich, wie in Figur 5 dargestellt ist, auch eine Speicherstrecke 10 mit einer geschlossenen Umlaufbahn einsetzen. Die Umsetzung der Produkte von dieser Speicherstrecke 10 zur Hauptförderstrasse 1 erfolgt vorzugsweise mittels eines dritten Karussells 8"'. Dieses dritte Karussell 8"' ist vorzugsweise gleich oder ähnlich ausgestaltet wie die oben beschriebenen Karussells 8, 8". Insbesondere weisen seine Greifarme vorzugsweise Saugnäpfe. Des weiteren können die Greifarme starr oder verschwenkbar ausgebildet sein. Eine derartige Vorrichtung ist detailliert in der eingangs erwähnten EP 1'216'939 beschrieben. Die Verwendung einer derartigen geschlossenen Umlaufbahn hat den Vorteil, dass auch grosse Geschwindigkeitsschwankungen kompensiert werden können und dass weitere Speicher entfallen.

Im erfindungsgemässen Verfahren, welches beispielsweise mittels der oben beschriebenen Vorrichtung durchgeführt werden kann, werden im Verpackungsprozess nun verschiedene Komponenten oder Produkte wie Tablettenblisters und Packungsbeizettel dem Wallet zugeführt. Mindestens ein Teil dieser Komponenten werden von unterschiedlichen Herstellungs-, Verarbeitungs- und/oder Anlieferprozessen aus in unterschiedlichen Richtungen und im wesentlichen nicht synchron mit dem Hauptprozess gemäss Figur 1 zugeführt. Mindestens ein Teil der Komponenten wird üblicherweise nicht kontinuierlich, sondern getaktet zugeführt.

Der Hauptprozess hingegen zeichnet sich durch eine hohe kontinuierliche Geschwindigkeit aus. Deshalb müssen die einzelnen Produkte unabhängig von der Art ihrer Zulieferung mit dieser Geschwindigkeit synchron der Hauptförderstrasse zugeführt werden.

Dank der oben beschriebenen Karussells können die verschiedenen Produkte nun von beliebigen Richtungen zugeführt werden. Dies erhöht die Flexibilität des Layouts der gesamten Anlage. Die Zugänglichkeit kann steht optimal gewählt werden. Zudem wird der Durchsatz auf einem hohen Niveau gehalten, da die Produkte synchron mit der Prozessgeschwindigkeit abgegeben werden können. Die Prozessgeschwindigkeit kann dabei entweder die Hauptfördergeschwindigkeit sein oder je nach Art der zugeführten Produkte von einer Zuführeinheit bzw. der damit verbundenen Produktionseinheit eines einzelnen Produkts bestimmt sein.

Die Gesamtleistung des Prozesses wird entweder vom Hauptprozess gemäss Figur 1 oder von einem vorgelagerten Prozess, d.h. einem mit einer Zuführung verbundenen Prozess gesteuert. Vorzugsweise wird dabei die Leistung derart gesteuert, dass ein Puffer oder Speicher zwischen Hauptprozess und leistungsbestimmenden Prozess auf einem annähernd konstanten Füllgrad gehalten wird.

Vorteilhaft ist ferner, wenn auch eine automatische Qualitätskontrolle der zugeführten Produkte bereits bei der Zuführung erfolgt und Produkte, welche die gewünschten Anforderungen nicht erfüllen, vor der Umsetzung in die Hauptförderstrasse 1 aussortiert werden.

In diesen Ausführungsbeispielen wurde eine kontinuierlich arbeitende Verpackungsmaschine für Wallets beschrieben. Das erfindungsgemässe Verfahren und die Vorrichtung lassen sich jedoch auch mit anderen Vorrichtungen, insbesondere getakteten Verpackungseinheiten verwenden. Kontinuierlich arbeitende Verpackungseinheiten sind jedoch bevorzugt.

**Bezugszeichenliste**

| | |
|---|---|
| 1 | Hauptförderstrasse |
| 2 | Kartonbandmaterial |
| 3 | Bedruckungseinheit |
| 4 | Schneide- und Berillungseinheit |
| 5 | Packungsbeizettel |
| 6 | Tablettenblister |
| 7 | horizontale Schlauchbeutelmaschine |
| 70 | Folienbandmaterial |
| 71 | Verpackungsschlauch |
| 72 | Quersiegel- und Trenneinheit |
| 73 | Schlauchbeutel |
| 8 | erstes Karussell |
| 80 | Greifarm |
| 81 | Saugnapf |
| 82 | Drehrad |
| 83 | Trägerarm |
| 84 | pneumatische Verbindung |
| 8' | zweites Karussell |
| 8" | drittes Karussell |
| 9 | Anliefereinheit |
| 90 | erster Zuführer |
| 9' | Produktionseinheit |
| 90 | zweiter Zuführer |
| 10 | Speicherstrecke |
| | |
| W | Wallet |

## Patentansprüche

1. Verfahren zum Verpacken von Produkten in Wallet Packungen (W), wobei die Wallet Packungen (W) als Packungszuschnitte oder als Bandmaterial entlang einer sich kontinuierlich bewegenden Hauptförderstrasse (1) transportiert und die Produkte in den Bereich der Hauptförderstrasse (1) zugeführt, synchron zu einer Fördergeschwindigkeit der Hauptförderstrasse (1) in diese abgegeben und in dieser auf die Packungszuschnitte bzw. auf das Bandmaterial gelegt werden,
**dadurch gekennzeichnet, dass**
die Synchronisierung der Abgabe der Produkte in die Hauptförderstrasse (1) mittels mindestens eines annähernd horizontal drehendes Karussells (8, 8', 8") erfolgt.

2. Verfahren nach Anspruch 1, wobei mindestens zwei Karussells (8, 8', 8") Produkte in die Hauptförderstrasse (1) abgeben.

3. Verfahren nach Anspruch 2, wobei mindestens zwei Karussells (8, 8', 8") Produkte von unterschiedlichen vorgelagerten Prozessen auf die Hauptförderstrasse (1) umsetzen.

4. Verfahren nach einem der Ansprüche 1 bis 3, wobei die Fördergeschwindigkeit durch die Hauptförderstrasse (1) vorgegeben wird.

5. Verfahren nach einem der Ansprüche 1 bis 3, wobei die Fördergeschwindigkeit durch einen Prozess bestimmt wird, welcher einer Zuführung mindestens eines Teils der Produkte vorgelagert ist.

6. Verfahren nach einem der Ansprüche 1 bis 5, wobei die Fördergeschwindigkeit variiert wird.

7. Verfahren nach einem der Ansprüche 1 bis 6, wobei die Synchronisierung der Abgabe der Produkte in die Hauptförderstrasse (1) mittels einer annähernd horizontalen Schwenkbewegung der Produkte erfolgt.

8. Verfahren nach den Ansprüchen 3 und 5, wobei ein einziger vorgelagerter Prozess die Fördergeschwindigkeit der Hauptförderstrasse (1) bestimmt.

9. Verfahren nach Anspruch 8, wobei für Produkte von zweiten und weiteren vorgelagerten Prozessen Zwischenspeicher (10) bereitgestellt werden.

10. Verfahren nach Anspruch 9, wobei als Zwischenspeicher bewegliche Arme (80) eines Karussells (8, 8', 8") oder eine weitere in sich geschlossene Umlaufbahn verwendet werden.

11. Verfahren nach einem der Ansprüche 1 bis 10, wobei die Hauptförderstrasse (1) annähernd horizontal verläuft.

12. Verfahren nach einem der Ansprüche 1 bis 11, wobei die Karussells (8, 8', 8") Vakuumsauger (81) zum Ergreifen und Absetzen der Produkte aufweisen.

## Claims

1. Method for packing products in wallet packages (W), wherein the wallet packages (W) are transported as package blanks or as strip material along a continuously moving main conveyor line (1) and the products are fed into the region of the main conveyor line (1), delivered into the main conveyor line (1) synchronously with respect to a conveying speed of the latter and laid in the latter on the package blanks or on the strip material,
**characterized in that**
the delivery of the products into the main conveyor line (1) is synchronized by means of at least one approximately horizontally rotating carousel (8, 8', 8'').

2. Method according to Claim 1, wherein at least two carousels (8, 8', 8") deliver products into the main conveyor line (1).

3. Method according to Claim 2, wherein at least two carousels (8, 8', 8") transfer products from different upstream processes to the main conveyor line (1).

4. Method according to one of Claims 1 to 3, wherein the conveying speed through the main conveyor line (1) is predefined.

5. Method according to one of Claims 1 to 3, wherein the conveying speed is determined by a process upstream of the supply of at least some of the products.

6. Method according to one of Claims 1 to 5, wherein the conveying speed is varied.

7. Method according to one of Claims 1 to 6, wherein the delivery of the products into the main conveyor line (1) is synchronized by means of an approximately horizontal pivoting movement of the products.

8. Method according to Claims 3 and 5, wherein a single upstream process determines the conveying speed of the main conveyor line (1).

9. Method according to Claim 8, wherein intermediate stores (10) are provided for products of second and further upstream processes.

10. Method according to Claim 9, wherein moveable arms (80) of a carousel (8, 8', 8") or a further self-contained circulatory path are used as intermediate stores.

11. Method according to one of Claims 1 to 10, wherein the main conveyor line (1) extends approximately horizontally.

12. Method according to one of Claims 1 to 11, wherein the carousels (8, 8', 8") have vacuum suckers (81) for gripping and depositing the products.

## Revendications

1. Procédé pour emballer des produits dans des étuis-portefeuilles (W), les étuis-portefeuilles (W) étant transportés sous forme de pièces découpées d'emballage ou sous forme de matériau en bande le long d'une voie de transport principale (1) se déplaçant en continu, et les produits étant acheminés dans la région de la voie de transport principale (1), étant distribués dans celle-ci de manière synchronisée avec une vitesse de transport de la voie de transport principale (1), et étant placés, dans celle-ci, sur les pièces découpées d'emballage ou sur le matériau en bande,
**caractérisé en ce que**
la synchronisation de la distribution des produits dans la voie de transport principale (1) s'effectue au moyen d'au moins un carrousel (8, 8', 8") tournant approximativement horizontalement.

2. Procédé selon la revendication 1, dans lequel au moins deux carrousels (8, 8', 8") distribuent des produits dans la voie de transport principale (1).

3. Procédé selon la revendication 2, dans lequel au moins deux carrousels (8, 8', 8") transfèrent des produits de différents processus antérieurs à la voie de transport principale (1).

4. Procédé selon l'une quelconque des revendications 1 à 3, dans lequel la vitesse de transport est prédéfinie par la voie de transport principale (1).

5. Procédé selon l'une quelconque des revendications 1 à 3, dans lequel la vitesse de transport est déterminée par un processus qui est placé en amont d'au moins une alimentation en une partie des produits.

6. Procédé selon l'une quelconque des revendications 1 à 5, dans lequel la vitesse de transport varie.

7. Procédé selon l'une quelconque des revendications 1 à 6, dans lequel la synchronisation de la distribution des produits dans la voie de transport principale (1) s'effectue au moyen d'un déplacement de pivotement des produits approximativement horizontal.

8. Procédé selon les revendications 3 et 5, dans lequel un processus unique amont détermine la vitesse de transport de la voie de transport principale (1).

9. Procédé selon la revendication 8, dans lequel on fournit des dispositifs de stockage intermédiaire (10) pour des produits de deuxièmes processus amont et d'autres processus amont.

10. Procédé selon la revendication 9, dans lequel on utilise comme dispositifs de stockage intermédiaire des bras mobiles (80) d'un carrousel (8, 8', 8") ou une autre voie de circulation fermée en soi.

11. Procédé selon l'une quelconque des revendications 1 à 10, dans lequel la voie de transport principale (1) s'étend approximativement horizontalement.

12. Procédé selon l'une quelconque des revendications 1 à 11, dans lequel les carrousels (8, 8', 8") présentent des ventouses (81) pour saisir et déposer les produits.
